# FASCICULE DE BREVET EUROPEEN

(11) **EP 0 665 257 B1**
(45) Date de publication et mention de la délivrance du brevet: **01.09.1999**
(21) Numéro de dépôt: 95420021.8
(22) Date de dépôt: 27.01.1995
(51) Int. Cl.: C08G 77/22, C08G 77/398, C08L 83/06, C09D 183/06

(54) **Photoamorceurs organométalliques polymériques et les compositions polyorganosiloxanes qui les comprennent réticulables par voie cationique**
Polymere Organometall-Photoinitiatoren und diese enthaltende kationisch vernetzbare Polyorganosiloxan-Zusammensetzungen
Polymeric organometal photoinitiators and cationically crosslinkable polyorganosiloxane compositions containing them

(30) Priorité: 31.01.1994 FR 9401239
(43) Date de publication de la demande: 02.08.1995
(73) Titulaire: RHODIA CHIMIE, 92408 Courbevoie Cédex (FR)
(72) Inventeur: Priou, Christian, F-69100 Villeurbanne (FR)
(74) Mandataire: Trolliet, Maurice

(56) Documents cités:
- EP-A- 0 270 490
- EP-A- 0 464 706
- DE-A- 2 135 984
- DE-C- 4 110 793
- US-A- 4 450 360

## Description

La présente invention concerne, dans son premier objet, de nouveaux photoamorceurs cationiques de polymérisation consistant en des sels de complexes organométalliques qui sont greffés sur un squelette polyorganosiloxane. Elle concerne, dans un second objet, les procédés de préparation de ces photoamorceurs organométalliques greffés sur un squelette polyorganosiloxane. Elle concerne encore, dans un troisième objet, des compositions à base d'un polyorganosiloxane à groupements fonctionnels réticulables par voie cationique et d'une quantité efficace dudit photoamorceur organométallique greffé. Elle concerne enfin, dans un quatrième objet, l'utilisation des dites compositions dans les domaines par exemple de l'antiadhérence papier, de l'encapsulation de composants électroniques, de la réalisation d'élastomères silicone.

Il est connu de mettre en oeuvre, pour la réalisation de revêtements, des compositions à base d'un prépolymère à fonction(s) époxy auquel est additionné, pour effectuer la réticulation, un sel photoamorceur de polymérisation cationique consistant dans un sel d'onium (cf. notamment US-A-4 450 360, US-A-4 576 999) ou un sel de ferrocénium (cf. notamment EP-A-0 203 829).

On a constaté que les photoamorceurs dont l'entité anionique est choisie par exemple parmi BF₄⁻, PF₆⁻, AsF₆⁻, SbF₆⁻, ne sont pas très efficaces lorsqu'ils sont utilisés pour réticuler un polymère silicone à fonction(s) époxy ; ce défaut d'efficacité provient d'une réactivité assez faible qui est liée d'une part à la nature de l'anion et d'autre part à un manque de solubilité de l'amorceur dans la matrice à polymériser. L'utilisation d'un solvant ne permet pas de remédier à cet inconvénient lorsque l'on souhaite réaliser des revêtements en couche mince, par suite de l'évaporation du solvant qui s'accompagne de la précipitation du sel amorceur dans le matériau silicone ; on cherche aussi à éviter l'utilisation d'un solvant pour des raisons touchant à la qualité de l'environnement et à la sécurité.

Un des objectifs essentiel de la présente invention est de fournir un photoamorceur de polymérisation cationique dérivé de sels de complexes organométalliques dont la compatibilité dans la matrice polymère à réticuler est améliorée jusqu'à obtenir une bonne solubilité du photoamorceur dans ladite matrice sans faire appel à l'utilisation d'un tiers-solvant.

Un autre objectif de l'invention est de fournir un photoamorceur dérivé de sels de complexes organométalliques à compatibilité améliorée, dont la préparation peut être réalisée dans des conditions industriellement intéressantes.

Un autre objectif encore de l'invention est de fournir une composition à base d'un polyorganosiloxane et d'un photoamorceur de polymérisation cationique dérivé de sels de complexes organométalliques, qui peut être utilisée dans l'état où elle se trouve pour réaliser un revêtement et permet notamment la réticulation d'une couche mince du revêtement silicone sur le substrat à revêtir à une vitesse élevée compatible avec une bonne productivité des applications industrielles envisagées.

Ces objectifs et d'autres objectifs sont atteints par la présente invention qui concerne, dans son premier objet, de nouveaux photoamorceurs de polymérisation cationique dérivés de sels de complexes organométalliques , caractérisés en ce que :
- ils consistent en des sels de complexes organométalliques greffés sur un squelette polyorganosiloxane, et
- ils répondent à une structure moléculaire linéaire de formule moyenne : 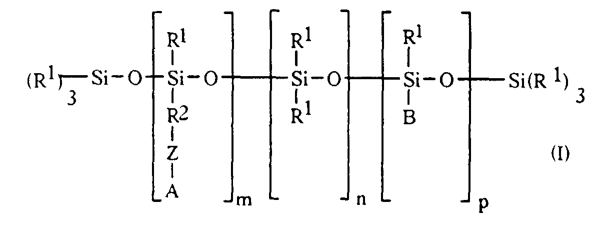 dans laquelle :
   - les différents motifs siloxyles sont répartis de manière statistique dans la structure moléculaire ;
   - m est un nombre entier ou fractionnaire allant de 0,5 à 50 ;
   - n est un nombre entier ou fractionnaire allant de 0 à 500 ;
   - p est un nombre entier ou fractionnaire allant de 0 à 50 ;
   - la somme m + n est supérieure ou égale à 2 ;
   - les symboles R¹ sont semblables ou différents et représentent chacun un radical alkyle, linéaire ou ramifié, ayant de 1 à 6 atomes de carbone ou phényle ;
   - le symbole A représente un reste monovalent dérivé d'un sel organométallique de formule (II) :

      (L¹L²M)^{+q}, _{q}X⁻ (II)

      formule dans laquelle :
      - M représente un métal appartenant aux groupes 4 à 10 de la classification périodique;
      - L¹ représente un ligand ou 2 ligands identiques ou différents lié(s) au métal M par des liaisons π, ligand(s) choisi(s) parmi les ligands η³-allylalkyle, η⁵-cyclopentadiényle et η⁷-cycloheptatriényle et les composés η⁶-aromatiques choisis parmi les ligands η⁶-benzène éventuellement substitués et les composés ayant de 2 à 4 cycles condensés, chaque cycle étant capable de contribuer à la couche de valence du métal M par 3 à 8 électrons π ;
      - L² représente de 0 à 3 ligand(s) identique(s) ou différent(s) lié(s) au métal M par des électrons σ, ligand(s) choisi(s) parmi CO et NO₂⁺ ;
      - X⁻ est un anion complexe halogéné choisi parmi les anions BF₄⁻, PF₆⁻, AsF₆⁻, SbF₆⁻ et leurs mélanges ;
      - q est un nombre entier positif égal à 1 ou 2 qui représente la charge électronique de la partie cationique du sel de formule (II) ;
      - le lien valentiel unissant le symbole monovalent A à Z est porté par un atome de carbone du ligand L¹ ou de l'un des 2 ligands L¹ qui, dans le cas d'un ligand cyclique, est un atome de carbone cyclique ;
   - le symbole R² représente un radical organique divalent choisi parmi :
      (1) les radicaux alkylènes, linéaires ou ramifiés, ayant de 2 à 6 atomes de carbone ;
      (2) les radicaux de formule :

         -R³-O-R⁴- (III)

         dans laquelle les radicaux R³ et R⁴, identiques ou différents, représentent des radicaux alkylènes, linéaires ou ramifiés, ayant de 1 à 6 atomes de carbone ;
      (3) les radicaux alkylène-cyclohexylènes dont la partie alkylène, linéaire ou ramifiée, comporte de 2 à 4 atomes de carbone et la partie cyclohexylène qui est reliée au groupement Z, comporte un groupement OH et éventuellement 1 ou 2 substituants alkyles ayant 1 à 3 atomes de carbone ;
      (4) les radicaux de formule :

         -R⁵-O-R⁶- (IV)

         dans laquelle les radicaux R⁵ et R⁶, identiques ou différents, représentent des radicaux alkylènes, linéaires ou ramifiés, ayant de 1 à 6 atomes de carbone et le radical R⁶, qui est relié au groupement Z, ou ces deux radicaux est (ou sont) substitué(s) par un ou deux groupement(s) OH,
   - le symbole Z représente un groupement de connexion choisi parmi :
      (5) quand le symbole R² possède les significations (1) et (2) : le reste silyle divalent de formule :

         -Si(R⁷)₂- (V)

         dans laquelle les radicaux R⁷ sont semblables ou différents et représentent chacun un radical alkyle, linéaire ou ramifié, ayant de 1 à 6 atomes de carbone ; et
      (6) quand le symbole R² possède les significations (3) et (4) : le radical -O-CO- dans lequel c'est la valence libre du CO qui est reliée au reste A ;
   - avec les conditions supplémentaires selon lesquelles :
      (7) quand le symbole R² possède les significations (1) et (2) et le symbole Z, la signification (5) : p est un nombre alors égal à zéro ;
      (8) quand le symbole R² possède les significations (3) et (4) et le symbole Z, la signification (6) : p est un nombre égal à zéro ou un nombre positif et dans cette éventualité le symbole B représente alors le radical précurseur du radical R² comportant à son extrémité, qui est opposée à celle liée à l'atome de silicium, un groupe époxy résultant de l'union d'un atome d'oxygène avec 2 atomes de carbone appartenant à une chaîne alkyle ou à un radical cyclohexyle.

De préférence, les nouveaux photoamorceurs de polymérisation cationique selon la présente invention sont les composés de formule (I) dans laquelle :
- m est un nombre entier ou fractionnaire allant de 0,5 à 20 ;
- n est un nombre entier ou fractionnaire allant de 1 à 100 ;
- p est un nombre entier ou fractionnaire allant de 0 à 20 ;
- R¹ est choisi parmi les radicaux méthyle, éthyle, n-propyle et phényle ;
- le symbole A représente un reste monovalent dérivé d'un sel organométallique de formule (II) dans laquelle M est un métal choisi parmi Cr, Mo, W, Mn, Fe, Re et Co ;
- R² est choisi parmi :
   (1) les radicaux alkylènes linéaires ayant de 2 à 4 atomes de carbone ;
   (3) les radicaux alkylène-cyclohexylènes dont la partie alkylène linéaire comporte 2 ou 3 atomes de carbone et la partie cyclohexylène comporte un groupement OH;
   (4) les radicaux de formule (IV) dans laquelle les radicaux R⁵ et R⁶, identiques ou différents, représentent des radicaux alkylènes linéaires ayant de 2 à 4 atomes de carbone et le radical R⁶, qui est relié au groupement Z, est substitué par un groupe OH ;
- Z est choisi, selon la règle précitée tenant compte des significations de R², parmi le reste (5) silylène de formule (V) où les radicaux R⁷ sont choisis parmi les radicaux méthyle, éthyle et n-propyle, et le radical (6) -O-CO- ;
- les conditions supplémentaires (7) et (8), dont on a parlé ci-avant à propos des définitions générales données pour la formule (I), étant également reprises dans le cadre de ces définitions données à titre préférentiel.

De manière plus préférentielle, les nouveaux photoamorceurs selon la présente invention sont les composés de formule (I) appartenant au groupe de composés préférés définis ci-avant parmi la structure desquels le symbole A représente un reste monovalent dérivé d'un sel organométallique de formule II choisi parmi :
- le (η⁵-cyclopentadiényle) (η⁶-benzène) Fe⁺, X⁻
- le (η⁵-cyclopentadiényle) (η⁶-naphtalène) Fe⁺, X⁻
- le (η⁵-cyclopentadiényle) (η⁶-toluène) Fe⁺, X⁻
- le (η⁵-cyclopentadiényle) (η⁶-cumène) Fe⁺, X⁻
- le (η⁵-cyclopentadiényle) (η⁶-mesitylène) Fe⁺, X⁻
- le (η⁵-cyclopentadiényle) (η⁶-méthyl-1-naphtalène) Fe⁺, X⁻
- le bis (η⁶-benzène) Cr⁺, X⁻
- où la valence libre du symbole monovalent A est portée par un ligand L¹ ou l'un des 2 ligands L¹ qui n'est pas substitué, et X⁻ est choisi lui-même parmi PF₆⁻, AsF₆⁻, SbF₆⁻ et leurs mélanges.

Comme exemples spécifiques de composés photoamorceurs de formule (I), on peut citer les composés pour lesquels :
- m est un nombre entier ou fractionnaire allant de 0,5 à 5 ;
- n est un nombre entier ou fractionnaire allant de 30 à 50 ;
- p est un nombre entier ou fractionnaire allant de 0 à 15 ;
- R¹ représente un groupe méthyle,
- le substituant A-Z-R²- est choisi parmi les groupements de formules ;

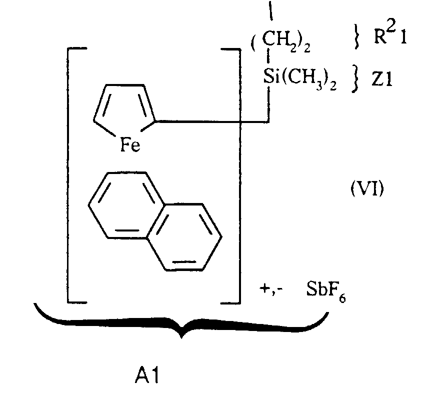

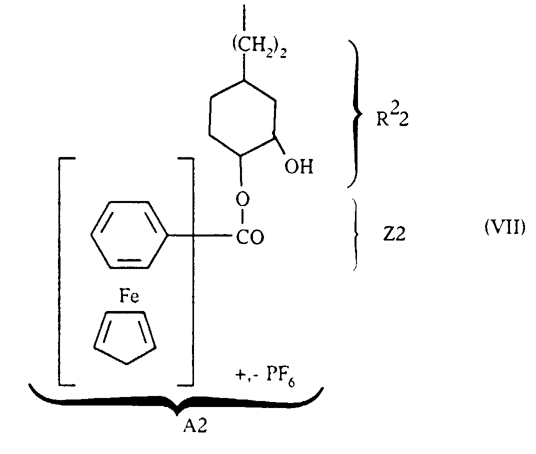

La préparation des photoamorceurs organométalliques greffés sur un squelette polyorganosiloxane de formule (I), et ceci constitue un second objet de la présente invention, peut être réalisée en appliquant différents procédés.

Selon un premier procédé qui est adapté à la préparation de composés photoamorceurs de formule (I) où p = 0, R² possède les significations (1) et (2) et Z est -Si(R⁷)_{2,}-, la préparation se fait à partir d'un composé polyorganosiloxane à fonction(s) hydrogéno de formule générale (VIII) : 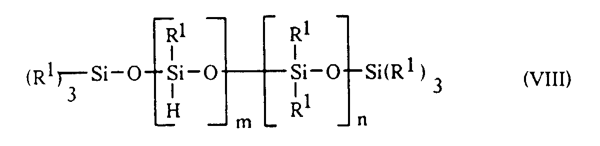 dans laquelle les symboles R¹, m et n ont les significations générales ou préférées indiquées ci-avant pour les composés de formule (I). De tels composés de formule (VIII) sont disponibles dans le commerce.

Le remplacement des atomes d'hydrogène du composé (VIII) par le substituant A-Z-R²- se fait par réaction du polyorganosiloxane de formule (VIII) avec un composé présentant une insaturation éthylénique susceptible de réagir par une réaction d'hydrosilylation en présence d'un catalyseur approprié, comme par exemple un catalyseur à base de platine.

Ce composé sera donc le précurseur du substituant A-Z-R²- qui portera une insaturation éthylénique a l'extrémité libre du radical hydrocarboné lié à l'ensemble A-Z-.

Comme précurseur du substituant A-Z-R²-, on peut citer à titre d'exemple non limitatif le composé de formule A1-Z1-CH=CH₂ (IX) dans laquelle les symboles A1 et Z1 ont les significations indiquées ci-avant à propos de la formule (VI).

Le précurseur insaturé éthyléniquement du substituant A-Z-R²- peut être préparé en enchaînant par exemple les étapes suivantes :
- étape 1 : dans laquelle on prépare un ferrocène [2(η⁵-cyclopentadiényle)Fe] disubstitué, c'est-à-dire portant sur chaque ligand le groupe alkényldialkylsilyle souhaité, de la manière suivante : dans une première phase, le ferrocène est traité par un alkyllithium en opérant en milieu solvant et en présence d'un complexant aminé tel que par exemple celui décrit dans Org. React., 8, 258 (1954), puis dans une seconde phase on fait réagir le ferrocène disubstitué par un atome de lithium ainsi obtenu, sur un alkényldialkylchlorosilane approprié en opérant à température ambiante ;
- étape 2 : dans laquelle on procède à une réaction d'échange d'un des ligands cyclopentadiényles, substitués chacun par le groupe alkényldialkylsilyle, par le ligand aromatique souhaité en faisant réagir le ferrocène di-alkényldialkylsilyle substitué obtenu à l'issue de l'étape 1 avec le composé aromatique choisi, en opérant en présence d'un mélange à base d'une part de chlorure d'aluminium, d'un agent de réduction métallique (aluminium) et éventuellement de tétrachlorure de titane, et d'autre part d'un sel de métal alcalin de l'entité anionique X⁻ choisie. Les conditions opératoires (quantités respectives de réactifs, choix des solvants, durée, température, agitation, etc ...) sont à la portée de l'homme de l'art.

Selon un second procédé qui est adapté à la préparation de composés photoamorceurs de formule (I) où p est zéro ou un nombre positif, R² possède les significations (3) et (4) et Z est -O-CO-, la préparation se fait à partir d'un composé polyorganosiloxane à fonction(s) époxy de formule générale (X) : 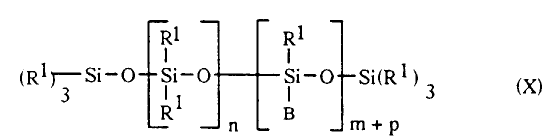 dans laquelle les symboles R¹, B, m, n et p ont les significations générales ou préférées indiquées ci-avant pour les composés de formule (I). De tels composés de formule (X) sont des produits connus, décrits notamment dans FR-A-2 110 115 et FR-A-2 526 800.

La transformation de tout ou partie des radicaux B du composé (X) en des substituants A-Z-R²- se fait par réaction d'ouverture du groupe époxy (porté par B) par une fonction COOH libre portée par le ligand L¹ ou l'un des 2 ligands L¹ du sel organométallique fonctionnalisé qui sera donc le précurseur de l'ensemble A-Z-. Cette réaction peut être mise en oeuvre dans un solvant tel que par exemple le toluène, le THF, la méthylisobutylcétone, l'acétate d'éthyle, un mélange méthylisobutylcétone/acétone, et en présence d'un catalyseur tel que par exemple une amine tertiaire ; en général la température de réaction se situe entre 60°C et 120°C.

Comme radicaux B, on peut citer à titre d'exemples non limitatifs, les radicaux :

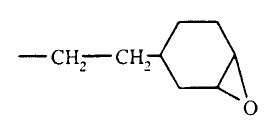

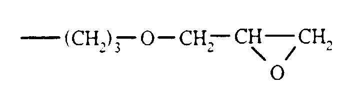

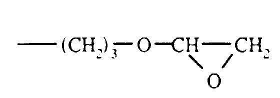

Comme sel organométallique à fonctionnalité COOH qui est le précurseur de l'ensemble A-Z-, on peut citer à titre d'exemple non limitatif le composé de formule A2-Z2-H (XI) dans laquelle les symboles A2 et Z2 ont les significations indiquées ci-avant à propos de la formule (VII).

Le précurseur à fonctionnalité COOH de l'ensemble A-Z- peut être préparé en enchaînant par exemple les étapes suivantes :
- étape 1' : dans laquelle on prépare un sel de ferrocénium (η⁵-cyclopentadiényle)(η⁶-toluène) Fe⁺, BF₄⁻ en faisant réagir le ferrocène avec le toluène en opérant en présence d'un mélange à base d'une part de chlorure d'aluminium, d'un agent de réduction métallique (aluminium) et éventuellement du tétrachlorure de titane, et d'autre part d'un sel de métal alcalin de l'entité BF₄⁻ choisie ;
- étape 2' : dans laquelle on procède à l'oxydation du radical méthyle porté par le ligand toluène du sel de ferrocénium obtenu à l'issue de l'étape 1', en opérant dans l'eau à l'aide d'un oxydant chimique comme par exemple le permanganate de potassium, cette phase d'oxydation étant suivie éventuellement d'une autre phase visant à échanger l'anion BF₄⁻ par l'anion PF₆⁻ ou SbF₆⁻. Les conditions opératoires (quantités respectives de réactifs, durée, température, agitation, etc...) sont là aussi à la portée de l'homme de l'art.

Les composés photoamorceurs de formule (I) sont particulièrement utilisables comme agent de réticulation au sein d'une composition polyorganosiloxane réticulable par voie cationique par exemple en couche mince ou en couche épaisse.

Plus précisément la présente invention concerne dans un troisième objet des compositions polyorganosiloxanes réticulables par voie cationique, par voie photochimique ou sous faisceau d'électrons, caractérisées en ce qu'elles comprennent :
(a) 100 parties d'un polyorganosiloxane comprenant des groupements fonctionnels de type époxy ;
(b) une quantité efficace d'un composé photoamorceur organométallique de formule (I) ;
(c) 0 à 50 parties d'au moins un autre ingrédient appartenant à la famille des additifs habituellement utilisés dans ce domaine de la technique.

Les polyorganosiloxane (a) sont (i) linéaires ou sensiblement linéaires et constitués de motifs de formule (XII) et terminés par des motifs de formule (XIII) ou (2i) cycliques constitués de motifs de formule (XII) : 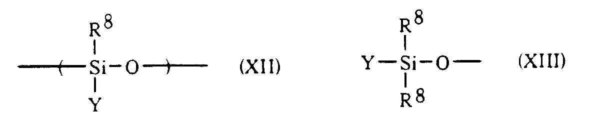 formules dans lesquelles :
- les symboles R⁸ sont semblables ou différents et représentent un radical alkyle linéaire ou ramifié en C₁ - C₆ éventuellement substitué (3,3,3-trifluoropropyl, par exemple), cycloalkyle en C₅ - C₈, aryle (phényle notamment), aryle substitué (dichlorophényle par exemple), au moins 60 % molaire des radicaux R⁸ étant des radicaux méthyles ;
- les symboles Y sont semblables ou différents, et représentent soit le groupement R⁸, soit un radical organique fonctionnel de type époxy réticulable par voie cationique, chaque fonction époxy étant reliée à un atome de la chaîne silicone par l'intermédiaire d'un radical divalent contenant de 2 à 20 atomes de carbone et éventuellement un ou plusieurs hétéroatome(s) comme par exemple l'oxygène ; comme radical de liaison, on peut citer par exemple les restes auxquels est rattaché le groupe époxy dans les radicaux B dont on a parlé ci-avant, qui sont les précurseurs des radicaux R² possédant les significations (3) et (4) données ci-avant ; lesdits polyorganosiloxanes (a) comprenant par mole de polymère au moins un motif siloxyle où Y est un groupement époxy fonctionnel ; de préférence, ils comprennent de 1 à 10 motifs siloxyles porteur(s) d'un groupement époxy fonctionnel.

Les polyorganosiloxanes époxy sont décrits notamment dans les brevets DE-A-4.009.889 ; EP-A-0.396.130 ; EP-A-0.355.381 ; EP-A-0.105.341 ; FR-A-2.110.115 ; FR-A-2.526.800.

Les polyorganosiloxanes époxy fonctionnels peuvent être préparés par réaction d'hydrosilylation entre des huiles à motifs Si-H et des composés époxy fonctionnels tels que par exemple vinyl-4 cyclohexène oxyde, allylglycidyléther.

Les polyorganosiloxanes époxy fonctionnels se présentent généralement sous forme de fluides présentant une viscosité à 25°C de 10 à 50.000 mPa.s et de préférence de 100 à 600 mPa.s. La viscosité dont on parle dans le présent mémoire est la viscosité dynamique à 25°C, dite "newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

Par quantité catalytique efficace d'un composé photoamorceur organométallique (b) de formule (I), on entend selon l'invention, la quantité suffisante pour amorcer la réticulation ; cette quantité, exprimée par la quantité de reste monovalent A dérivé du sel organométallique de formule (II), est généralement comprise entre 0,1 et 20 parties en poids, le plus souvent entre 0,5 et 8 parties en poids pour réticuler 100 parties en poids de polyorganosiloxane réticulable.

Les compositions selon l'invention peuvent comporter en outre d'autres ingrédients (c) tels que, par exemple, des modulateurs d'adhérence (résines ou polymères linéaires silicones portant des fonctions vinyle, époxy, vinyléther, alcool), des pigments, des photosensibilisateurs, des agents fongicides, bactéricides et anti-microbiens, des inhibiteurs de corrosion, des charges minérales telles que par exemple la silice, le carbonate de calcium.

Les compositions selon l'invention sont utilisables telles qu'elles sont obtenues, sans avoir besoin d'être mise en solution dans un solvant organique. Elles sont utiles en couche mince dans le domaine des revêtements anti-adhérents sur les matériaux cellulosiques, les peintures, ainsi qu'en couche épaisse pour l'encapsulation de composants électriques et électroniques, les revêtements pour textiles, ainsi que pour le gainage de fibres optiques.

Elles sont tout particulièrement intéressantes lorsqu'elles sont utilisées telles quelles pour rendre non adhérent un matériau, tel que des feuilles métalliques, du verre, des matières plastiques ou du papier, à d'autres matériaux auxquels il adhérerait normalement. La composition présente avantageusement une viscosité ne dépassant pas 15.000 mPa.s de préférence ne dépassant pas 4.000 mPa.s à 25°C.

L'invention vise donc également et, ceci constitue un quatrième objet de l'invention, un procédé permettant de rendre des articles (feuilles par exemple) non adhérents à des surfaces auxquelles ils adhèrent normalement, procédé caractérisé en ce qu'il consiste à appliquer une quantité de composition de l'invention, comprise généralement entre 0,1 et 5 g par m² de surface à enduire et à réticuler la composition par apport d'énergie dont au moins une partie, de préférence la totalité, est fournie par un rayonnement U.V.

Le rayonnement U.V. utilisé présente une longueur d'onde comprise entre 200 et 400 namomètres, de préférence comprise entre 254 et 360 namomètres.

La durée d'irradiation peut être courte et elle est généralement inférieure à 1 seconde et est de l'ordre de quelques centièmes de seconde pour les faibles épaisseurs de revêtement. La réticulation effectuée est excellente même en l'absence de tout chauffage. Bien entendu un chauffage entre 25 et 100°C n'est pas exclu de l'invention.

Bien entendu, on peut régler le temps de durcissement notamment, par le nombre de lampes U.V. utilisées, par la durée d'exposition aux U.V. et par la distance entre la composition et la lampe U.V.

Il est également possible d'utiliser un rayonnement à une longueur d'onde supérieure à 400 namomètres, située dans le visible.

Les compositions sont appliquées à l'aide de dispositifs aptes à déposer, d'une façon uniforme, de faibles quantités de liquides. On peut utiliser à cet effet par exemple le dispositif nommé "Helio glissant" comportant en particulier deux cylindres superposés : le rôle du cylindre placé le plus bas, plongeant dans le bac d'enduction où se trouve la composition, est d'imprégner en une couche très mince le cylindre placé le plus haut, le rôle de ce dernier est alors de déposer sur le papier les quantités désirées de composition dont il est imprégné, un tel dosage est obtenu par réglage de la vitesse respective des deux cylindres qui tournent en sens inverse l'un de l'autre.

Les quantités de compositions déposées sur les supports sont variables et s'échelonnent le plus souvent entre 0,1 et 5 g/m² de surface traitée. Ces quantités dépendent de la nature des supports et des propriétés antiadhérentes recherchées. Elles sont plus souvent comprises entre 0,5 et 1,5 g/m² pour des supports non poreux.

Les compositions de l'invention peuvent également être utilisées en couches plus épaisses (> 5 micromètres), comme vernis de tropicalisation ("comformal coating"), vernis dont le rôle est d'isoler électriquement les composants et les circuits d'un assemblage, ainsi que de les maintenir à l'abri de l'environnement extérieur et des facteurs mécaniques pouvant compromettre la performance de l'ensemble. Lesdites compositions peuvent alors être appliquées par pulvérisation ou par trempage, ou encore par brossage ; les épaisseurs de composition déposées dépendent du mode d'application choisi et varient le plus souvent de 5 micromètres à quelques dixièmes de millimètres ; une étape de polymérisation ultérieure peut dans certains cas être nécessaire ; celle-ci peut être accomplie par un traitement thermique.

La présente invention a également pour objet les articles (feuilles par exemple) constitués d'un matériau solide (métal, verre, matière plastique, papier) dont une surface au moins est revêtue de la composition ci-dessus décrite photoréticulée ou réticulée sous faisceau d'électrons.

Les exemples suivants sont donnés à titre illustratif et ne peuvent être considérés comme une limite du domaine et de l'esprit de l'invention.

### Exemple 1 :

Préparation d'un photoamorceur polymérique selon l'invention de formule (I) où p est un nombre positif, R² possède la signification (3) et Z est -O-CO-, à partir d'un composé polyorganosiloxane à fonctions époxy de formule (X) et du sel organométallique à fonctionnalité COOH de formule :(η⁵-cyclopentadiényle) (η⁶-carboxy-1-benzène) Fe⁺, PF₆⁻.

### 1) Préparation du sel de toluyl ferrocénium de formule : (η⁵-cyclopentadiényle)(η⁶-toluène) Fe⁺, BF₄⁻ à partir de ferrocène et de toluène :

Dans un ballon tricol de 500 ml équipé d'un agitateur mécanique, d'un réfrigérant et d'une ampoule de coulée, on charge le ferrocène (37,2 g ; 0,2 mole), le chlorure d'aluminium (33,4 g ; 0,25 mole), l'aluminium en poudre (1,08 g ; 0,04 mole) et le toluène (212 ml ; 2 moles). Le mélange est agité et est chauffé à 60°C pendant 30 min. A cette température, le chlorure de titane TiCl₄ (14 ml ; 0,1 mole) est ajouté goutte à goutte en 30 min. Le mélange réactionnel est ensuite porté au reflux du toluène pendant 2 heures. On laisse revenir la température à l'ambiante, puis on verse avec précaution le brut réactionnel sur 300 ml d'acide chlorhydrique à 6 % en poids d'HCl pur dans l'eau (hydrolyse acide). L'ensemble est agité pendant 30 min. à la température de 5°C. On additionne ensuite de l'eau oxygénée (concentration = 30 % en poids, 6 ml), puis on filtre pour éliminer l'oxyde de titane formé. Le mélange est décanté, les phases sont séparées. La phase aqueuse est lavée trois fois par l'hexane (100 ml), puis une solution saturée de NaBF₄ (22 g) est ajoutée. Le sel de ferrocénium précipite. Il est récupéré par filtration, puis est séché sous vide. Une purification plus poussée peut être effectuée par recristallisation dans un mélange acétone - eau. Le rendement de la réaction est de 45 %.

### 2) Oxydation du sel de toluyl ferrocénium :

Dans un ballon tricol de 1000 ml équipé d'un agitateur mécanique, d'un réfrigérant et d'une ampoule de coulée, on charge le sel de toluyl ferrocénium précédent (7,1 g ; 0,023 mole), le permanganate de potassium (18,45 g ; 0,118 mole) et l'eau (520 ml). Ce mélange est porté au reflux de l'eau pendant 20 heures, puis est laissé revenir à température ambiante. Une filtration est ensuite effectuée pour éliminer l'oxyde de manganèse formé pendant la réaction. On ajoute 7 ml d'acide chlorhydrique concentré pour amener le PH à 2. On évapore environ 200 ml d'eau sous pression réduite, puis on lave le mélange réactionnel par trois fractions d'hexane (100 ml). Une solution saturée d'hexafluorophosphate de potassium (4,3 g de KPF₆) est ajoutée. Le sel de toluyl ferrocénium à fonctionnalité COOH précipite. Il est récupéré par filtration, puis il est séché sous vide. La purification de ce sel est effectuée par recristallisation dans un mélange acétone-éther. On récupère 6,9 g de sel de toluyl ferrocénium à fonctionnalité COOH ce qui correspond à un rendement de 78 %.

### 3) Greffage du sel de toluyl ferrocénium à fonctionnalité COOH sur le composé polyorganosiloxane époxydé de formule moyenne :

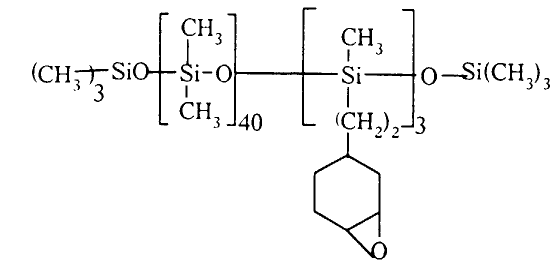

titrant 91 milliéquivalents molaires de fonctions époxy pour 100 g d'huile silicone :

Cette réaction doit être menée à l'abri de la lumière. Dans un ballon tricol de 50 ml équipé d'un agitateur mécanique et d'un réfrigérant, on charge 12 g de l'huile silicone portant des fonctions époxyde, le sel de toluyl ferrocénium précédent (4,23 g ; 0,011 mole), la méthylisobutylcétone (MIBK) (15 ml), l'acétone (4ml) et quatre gouttes de triéthylamine. Ce mélange est porté à la température de 100°C pendant 4 heures, puis il est refroidi à température ambiante. Les solvants et la triéthylamine sont éliminés à l'évaporateur rotatif, puis l'huile résiduelle est filtrée pour éliminer le sel de ferrocénium n'ayant pas réagi. On obtient ainsi une huile limpide de couleur orange. L'analyse RMN ¹H et ¹³C montre que 25 % des fonctions époxydes portées par l'huile ont été ouvertes pendant la réaction. L'huile photoréactive obtenu a pour formule moyenne :

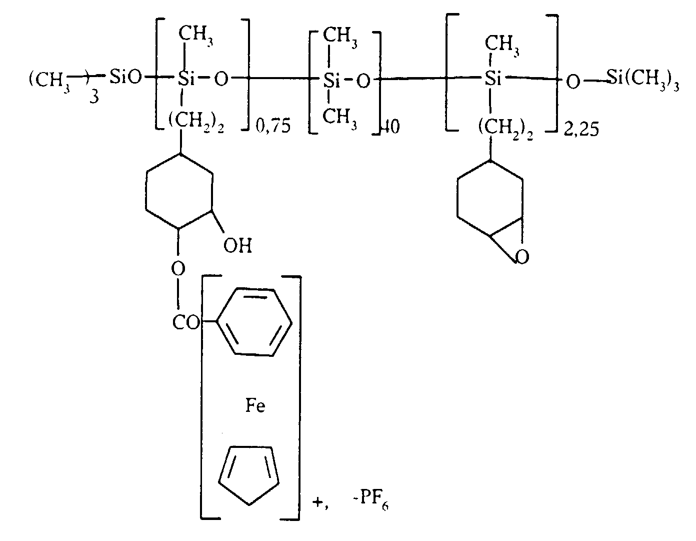

### Exemple 2

### Photoréticulation d'un polyorganosiloxane époxydé en couches épaisse et mince.

Le composé polyorganosiloxane époxydé soumis à la réticulation présente la même structure et formule moyenne que celles de l'huile silicone utilisée dans l'étape 3) de greffage de l'exemple 1.
1) Photoréticulation en couche épaisse :
   L'huile photoréactive de l'exemple 1 est mélangée à l'huile silicone époxydée à réticuler. Les deux huiles sont parfaitement miscibles. Le mélange (50/50 en poids) est déposé dans une coupelle de 1 cm de profondeur, puis est exposé pendant 10 minutes à la lumière solaire. On obtient un matériau réticulé sur toute l'épaisseur.
2) Photoréticulation en couche mince :
   On réalise un mélange 50/50 en poids de l'huile photoréactive de l'exemple 1 avec l'huile silicone époxydée à réticuler.
   Le mélange est ensuite déposé avec une épaisseur variable (environ 1 à 5 g/m²) sur du papier glassine (Sibille ® 9530 commercialisé par la Société SIBILLE) au moyen d'une barre de MAYER ® appropriée (commercialisée par la Société ERICHSEN G.B.).
   On fait passer ensuite le papier enduit sous une lampe U.V. de technologie FUSION SYSTEM ® F450 (commercialisée par la Société FUSION) et caractérisée par :
   - une longueur d'onde de 360 nm
   - une absence d'électrodes,
   - une excitation par micro-ondes,
   - une puissance de 120 W par cm irradié.

On note l'épaisseur de la couche déposée, ainsi que le nombre de passages et la vitesse de défilement en m/min qui sont nécessaires au durcissement de la couche.

Les performances en matière de vitesse de réticulation sont comparées à celles obtenues en utilisant, pour réaliser l'enduction, l'huile photoréactive seule (essais comparatifs a et b). Les résultats obtenus sont rapportés dans le tableau suivant :

| Exemple/Essai | Epaisseur de la couche | Vitesse de défilement | Nombre de passages |
|---|---|---|---|
| Ex. 2 - 2 | 1 µm | 7,5 m/min | 1 |
| Essai a | 5 µm | 3 m/min | 4 |
| Essai b | 1 µm | 3 m/min | 2 |

## Revendications

1. Photoamorceurs de polymérisation cationique dérivé de sels de complexes organométalliques, caractérisés en ce que :
• ils consistent en des sels de complexes organométalliques greffés sur un squelette polyorganosiloxane, et
• ils répondent à une structure moléculaire linéaire de formule moyenne : 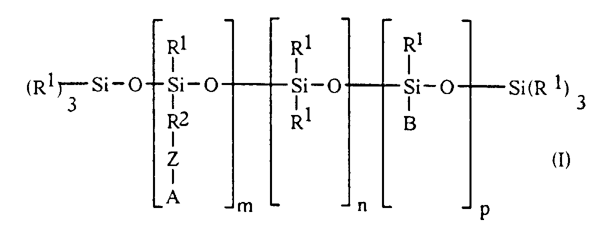 dans laquelle :
- les différents motifs siloxyles sont répartis de manière statistique dans la structure moléculaire ;
- m est un nombre entier ou fractionnaire allant de 0,5 à 50 ;
- n est un nombre entier ou fractionnaire allant de 0 à 500 ;
- p est un nombre entier ou fractionnaire allant de 0 à 50 ;
- la somme m + n est supérieure ou égale à 2 ;
- les symboles R¹ sont semblables ou différents et représentent chacun un radical alkyle, linéaire ou ramifié, ayant de 1 à 6 atomes de carbone ou phényle ;
- le symbole A représente un reste monovalent dérivé d'un sel organométallique de formule (II) :
(L¹L²M)^{+q}, qX⁻ (II)
formule dans laquelle :
• M représente un métal appartenant aux groupes 4 à 10 de la classification périodique;
• L¹ représente un ligand ou 2 ligands identiques ou différents lié(s) au métal M par des liaisons π, ligand(s) choisi(s) parmi les ligands η³-allylalkyle, η⁵-cyclopentadiényle et η⁷-cycloheptatriényle et les composés η⁶-aromatiques choisis parmi les ligands η⁶-benzène éventuellement substitués et les composés ayant de 2 à 4 cycles condensés, chaque cycle étant capable de contribuer à la couche de valence du métal M par 3 à 8 électrons π ;
• L² représente de 0 à 3 ligand(s) identique(s) ou différent(s) lié(s) au métal M par des électrons σ, ligand(s) choisi(s) parmi CO et NO₂⁺ ;
• X⁻ est un anion complexe halogéné choisi parmi les anions BF₄⁻, PF₆⁻, AsF₆⁻, SbF₆⁻ et leurs mélanges ;
• q est un nombre entier positif égal à 1 ou 2 qui représente la charge électronique de la partie cationique du sel de formule (II) ;
• le lien valentiel unissant le symbole monovalent A à Z est porté par un atome de carbone du ligand L¹ ou de l'un des 2 ligands L¹ qui, dans le cas d'un ligand cyclique, est un atome de carbone cyclique ;
- le symbole R² représente un radical organique divalent choisi parmi :
(1) les radicaux alkylènes, linéaires ou ramifiés, ayant de 2 à 6 atomes de carbone ;
(2) les radicaux de formule :
-R³-O-R⁴- (III)
dans laquelle les radicaux R³ et R⁴, identiques ou différents, représentent des radicaux alkylènes, linéaires ou ramifiés, ayant de 1 à 6 atomes de carbone ;
(3) les radicaux alkylène-cyclohexylènes dont la partie alkylène, linéaire ou ramifiée, comporte de 2 à 4 atomes de carbone et la partie cyclohexylène qui est reliée au groupement Z, comporte un groupement OH et éventuellement 1 ou 2 substituants alkyles ayant 1 à 3 atomes de carbone ;
(4) les radicaux de formule :
-R⁵-O-R⁶- (IV)
dans laquelle les radicaux R⁵ et R⁶, identiques ou différents, représentent des radicaux alkylènes, linéaires ou ramifiés, ayant de 1 à 6 atomes de carbone et le radical R⁶, qui est relié au groupement Z, ou ces deux radicaux et (ou sont) substitué(s) par un ou deux groupement(s) OH,
- le symbole Z représente un groupement de connexion choisi parmi :
(5) quand le symbole R² possède les significations (1) et (2) : le reste silyle divalent de formule :
-Si(R⁷)₂- (V)
dans laquelle les radicaux R⁷ sont semblables ou différents et représentent chacun un radical alkyle, linéaire ou ramifié, ayant de 1 à 6 atomes de carbone ; et
(6) quand le symbole R² possède les significations (3) et (4) : le radical -O-CO- dans lequel c'est la valence libre du CO qui est reliée au reste A ;
- avec les conditions supplémentaires selon lesquelles :
(7) quand le symbole R² possède les significations (1) et (2) et le symbole Z, la signification (5) : p est un nombre alors égal à zéro ;
(8) quand le symbole R² possède les significations (3) et (4) et le symbole Z, la signification (6) : p est un nombre égal à zéro ou un nombre positif et dans cette éventualité le symbole B représente alors le radical précurseur du radical R² comportant à son extrémité, qui est opposée à celle liée à l'atome de silicium, un groupe époxy résultant de l'union d'un atome d'oxygène avec 2 atomes de carbone appartenant à une chaîne alkyle ou à un radical cyclohexyle.

2. Photoamorceurs greffés selon la revendication 1, caractérisés en ce que les symboles m, n, p, R¹, A, R² et Z de la formule (I) ont les significations suivantes
- m est un nombre entier ou fractionnaire allant de 0,5 à 20 ;
- n est un nombre entier ou fractionnaire allant de 1 à 100 ;
- p est un nombre entier ou fractionnaire allant de 0 à 20 ;
- R¹ est choisi parmi les radicaux méthyle, éthyle, n-propyle et phényle ;
- le symbole A représente un reste monovalent dérivé d'un sel organométallique de formule (II) dans laquelle M est un métal choisi parmi Cr, Mo, W, Mn, Fe, Re et Co ;
- R² est choisi parmi :
(1) les radicaux alkylènes linéaires ayant de 2 à 4 atomes de carbone ;
(3) les radicaux alkylène-cyclohexylènes dont la partie alkylène linéaire comporte 2 ou 3 atomes de carbone et la partie cyclohexylène comporte un groupement OH;
(4) les radicaux de formule (IV) dans laquelle les radicaux R⁵ et R⁶, identiques ou différents, représentent des radicaux alkylènes linéaires ayant de 2 à 4 atomes de carbone et le radical R⁶, qui est relié au groupement Z, est substitué par un groupe OH ;
- Z est choisi, selon la règle précitée tenant compte des significations de R², parmi le reste (5) silylène de formule (V) où les radicaux R⁷ sont choisis parmi les radicaux méthyle, éthyle et n-propyle, et le radical (6) -O-CO-.

3. Photoamorceurs greffés selon la revendication 1 ou 2, caractérisés en ce que le symbole A représente un reste monovalent dérivé d'un sel organométallique de formule (II) choisi parmi :
• le (η⁵-cyclopentadiényle) (η⁶-benzène) Fe⁺, X⁻
• le (η⁵-cyclopentadiényle)(η⁶-naphtalène) Fe⁺, X⁻
• le (η⁵-cyclopentadiényle) (η⁶-toluène) Fe⁺, X⁻
• le (η⁵-cyclopentadiényle) (η⁶-cumène) Fe⁺, X⁻
• le (η⁵-cyclopentadiényle) (η⁶-mesitylène) Fe⁺, X⁻
• le (η⁵-cyclopentadiényle) (η⁶-méthyl-1-naphtalène) Fe⁺, X⁻
• le bis (η⁶-benzène) Cr⁺, X⁻
• où la valence libre du symbole monovalent A est portée par un ligand L¹ ou l'un des 2 ligands L¹ qui n'est pas substitué, et X⁻ est choisi lui-même parmi PF₆⁻, AsF₆⁻, SbF₆⁻ et leurs mélanges.

4. Procédé de préparation des photoamorceurs greffés, selon l'une quelconque des revendications 1 à 3, dans la formule (I) desquels p = 0, R² possède les significations (1) et (2) et Z est -Si(R⁷)₂-, caractérisé en ce que :
- on utilise un composé polyorganosiloxane à fonction(s) hydrogéno de formule générale (VIII) : 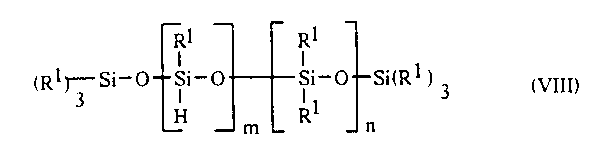 dans laquelle les symboles R¹, m et n ont les significations générales ou préférées indiquées ci-avant pour les composés de formule (I) ; et
- le remplacement des atomes d'hydrogène du composé (VIII) par le substituant A-Z-R²- se fait par réaction du polyorganosiloxane de formule (VIII) avec un composé présentant une insaturation éthylénique susceptible de réagir par une réaction d'hydrosilylation en présence d'un catalyseur approprié.

5. Procédé de préparation des photoamorceurs greffés, selon l'une quelconque des revendications 1 à 3, dans la formule (I) desquels p est zéro ou un nombre positif, R² possède les significatios (3) et (4) et Z est -O-CO-, caractérisé en ce que :
- on utilise un composé polyorganosiloxane à fonction(s) époxy de formule générale (X) : 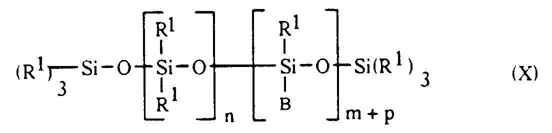 dans laquelle les symboles R¹, B, m, n et p ont les significations générales ou préférées indiquées ci-avant pour les composés de formule (I) ; et
- la transformation de tout ou partie des radicaux B du composé (X) en des substituants A-Z-R²- se fait par réaction d'ouverture du groupe époxy (porté par B) par une fonction COOH libre portée par le ligand L¹ ou l'un des 2 ligands L¹ du sel organométallique fonctionnalisé qui sera donc le précurseur de l'ensemble A-Z-.

6. Compositions polyorganosiloxanes réticulables par voie cationique, par voie photochimique ou sous faisceau d'électrons, caractérisées en ce qu'elles comprennent :
(a) 100 parties d'un polyorganosiloxane comprenant des groupements fonctionnels de type époxy ;
(b) une quantité efficace d'un composé photoamorceur organométallique de formule (I) faisant l'objet de l'une quelconque des revendications 1 à 3 précédentes ;
(c) 0 à 50 parties d'au moins un autre ingrédient appartenant à la famille des additifs habituellement utilisés dans ce domaine de la technique.

7. Compositions selon la revendication 6, caractérisées en ce que les polyorganosiloxane (a) sont (i) linéaires ou sensiblement linéaires et constitués de motifs de formule (XII) et terminés par des motifs de formule (XIII) ou (2i) cycliques constitués de motifs de formule (XII) : 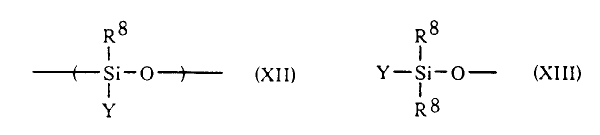 formules dans lesquelles :
• les symboles R⁸ sont semblables ou différents et représentent un radical alkyle linéaire ou ramifié en C₁ - C₆ éventuellement substitué, cycloalkyle en C₅ - C₈, aryle, aryle substitué, au moins 60 % molaire des radicaux R⁸ étant des radicaux méthyles ;
• les symboles Y sont semblables ou différents, et représentent soit le groupement R⁸, soit un radical organique fonctionnel de type époxy réticulable par voie cationique chaque fonction époxy étant reliée à un atome de la chaîne silicone par l'intermédiaire d'un radical divalent contenant de 2 à 20 atomes de carbone et éventuellement 1 ou plusieurs hétéroatome(s) ;
lesdits polyorganosiloxanes (a) comprenant par mole de polymère au moins un motif siloxyle où Y est un groupement époxy fonctionnel.

8. Compositions selon les revendications 6 ou 7, caractérisées en ce que la quantité du photoamorceur organométallique (b) de formule (I), exprimée par la quantité de reste monovalent A dérivé du sel organométallique de formule (II) apportée par ledit photoamorceur (b), est comprise entre 0,1 et 20 parties en poids pour réticuler 100 parties en poids de polyorganosiloxane réticulable.

9. Procédé pour rendre des articles non adhérents à des surfaces auxquelles ils adhéreraient normalement, caractérisé en ce qu'on applique entre 0,1 et 5 g par m² de surface dudit article à enduire de composition faisant l'objet de l'une quelconque des revendications 6 à 8 et on réticule ladite compostiion par voie photochimique ou sous faisceau d'électrons.

10. Procédé selon la revendication 9, caractérisé en ce que l'opération de réticulation est réalisée par un rayonnement U.V. de longueur d'onde de l'ordre de 200 à 400 namomètres.

11. Utilisation des compositions faisant l'objet de l'une quelconque des revendications 6 à 8, en couche épaisse pour encapsuler les composants électriques et électroniques, revêtir les textiles, ainsi que pour gainer les fibres optiques.

## Patentansprüche

1. Photoinitiatoren zur kationischen Polymerisation, abgeleitet von den Salzen von Organometallkomplexen, dadurch gekennzeichnet, daß sie
• aus Salzen von Organometallkomplexen bestehen, die auf ein Gerüst von Polyorganosiloxan gepfropft sind, und
• einer linearen molekularen Struktur der mittleren Formel 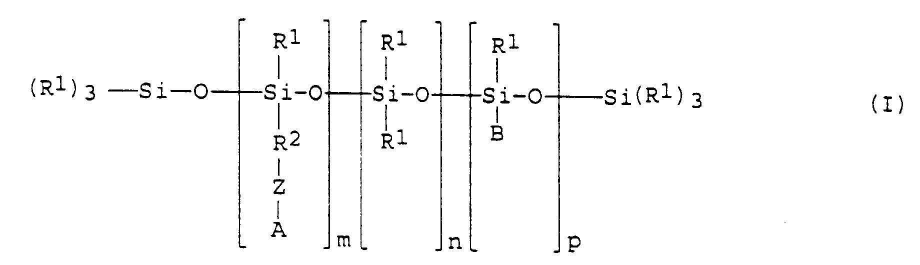 entsprechen, in der
- die verschiedenen Struktureinheiten Siloxyl in statistischer Weise in der molekularen Struktur verteilt sind;
- m eine ganze oder gebrochene Zahl von 0,5 bis 50 ist;
- n eine ganze oder gebrochene Zahl von 0 bis 500 ist;
- p eine ganze oder gebrochene Zahl von 0 bis 50 ist;
- die Summe m + n höher oder gleich 2 ist;
- die Symbole R¹ gleich oder verschieden sind und jeweils einen linearen oder verzweigten Rest Alkyl mit 1 bis 6 Kohlenstoffatomen oder Phenyl darstellen;
- das Symbol A einen monovalenten Rest bedeutet, abgeleitet von einem Organometallsalz der Formel (II)
(L¹L²M)^{+q}, qX⁻ (II)
wobei in der Formel:
• M ein Metall darstellt, das aus den Gruppen 4 bis 10 des Periodensystems der Elemente stammt;
• L¹ einen Liganden oder zwei gleiche oder verschiedene Liganden bedeutet, verbunden mit dem Metall M durch Bindungen π, wobei der oder die Ligand(en) ausgewählt werden unter den Liganden η³-Allylalkyl, η⁵-Cyclopentadienyl und η⁷-Cycloheptatrienyl und die η⁶-aromatischen Verbindungen ausgewählt werden unter den Liganden η⁶-Benzol, gegebenenfalls substituiert, und den Verbindungen mit 2 bis 4 kondensierten Ringen, wobei jeder Ring fähig ist, zur Valenzschale des Metalls M durch 3 bis 8 π-Elektronen beizutragen;
• L² 0 bis 3 gleiche oder verschiedene Liganden darstellt, verbunden mit dem Metall M durch σ-Elektronen, wobei der oder die Liganden ausgewählt werden unter CO und NO₂⁺;
• X⁻ ein halogeniertes, komplexes Anion bedeutet, ausgewählt unter den Anionen BF₄⁻, PF₆⁻, AsF₆⁻, SbF₆⁻ und ihren Mischungen;
• q eine positive ganze Zahl von 1 oder 2 darstellt, die die elektronische Ladung des kationischen Teils des Salzes der Formel (II) verkörpert;
• die Valenzbindung, die die monovalenten Symbole A bis Z vereinigt, von einem Kohlenstoffatom des Liganden L¹ oder von einem der zwei Liganden L¹ getragen wird, das in dem Fall eines cyclischen Liganden ein cyclisches Kohlenstoffatom ist;
- das Symbol R² ein divalenter organischer Rest ist, ausgewählt unter:
(1) den linearen oder verzweigten Resten Alkylen mit 2 bis 6 Kohlenstoffatomen;
(2) den Resten der Formel (III)
-R³-O-R⁴- (III)
worin die Reste R³ und R⁴, gleich oder verschieden, lineare oder verzweigte Reste Alkylen mit 1 bis 6 Kohlenstoffatomen darstellen;
(3) den Resten Alkylen-cyclohexylen, deren Teil Alkylen, linear oder verzweigt, 2 bis 4 Kohlenstoffatome umfaßt und deren Teil Cyclohexylen, der mit der Gruppe Z verbunden ist, eine Gruppe OH und gegebenenfalls 1 oder 2 Substituenten Alkyl mit 1 bis 3 Kohlenstoffatomen umfaßt;
(4) den Resten der Formel (IV)
-R⁵-O-R⁶- (IV)
worin die Reste R⁵ und R⁶, gleich oder verschieden, lineare oder verzweigte Reste Alkylen mit 1 bis 6 Kohlenstoffatomen darstellen und der Rest R⁶, der mit der Gruppe Z verbunden ist, oder diese zwei Reste durch eine oder zwei Gruppen OH substituiert ist (sind);
- das Symbol Z eine Verbindungsgruppe darstellt, ausgewählt unter:
(5) wenn das Symbol R² die Bedeutungen (1) und (2) besitzt: dem divalenten Rest Silyl der Formel (V)
-Si(R⁷)₂₋ (V)
worin die Reste R⁷ gleich oder verschieden sind und jeweils einen linearen oder verzweigten Rest Alkyl mit 1 bis 6 Kohlenstoffatomen darstellen, und
(6) wenn das Symbol R² die Bedeutungen (3) und (4) besitzt: dem Rest -O-CO-, worin die freie Valenz des CC mit dem Rest A verbunden ist;
- mit den zusätzlichen Bedingungen, nach denen:
(7) wenn das Symbol R² die Bedeutungen (1) und (2) und das Symbol Z die Bedeutung (5) besitzen: dann p eine Zahl gleich null ist;
(8) wenn das Symbol R² die Bedeutungen (3) und (4) und das Symbol Z die Bedeutung (6) besitzen: dann p eine Zahl gleich null oder eine positive Zahl ist, und bei dieser Eventualität das Symbol B den Rest eines Vorläufers des Restes R² darstellt, der an seinem Ende, das dem mit dem Siliciumatom verbundenen gegenüberliegt, eine Gruppe Epoxy umfaßt, resultierend aus der Vereinigung eines Sauerstoffatomes mit zwei Kohlenstoffatomen, die von einer Alkylkette oder einem Rest Cyclohexyl stammen.

2. Gepfropfte Photoinitiatoren nach Anspruch 1, dadurch gekennzeichnet, daß die Symbole m, n, p, R¹, A, R² und Z der Formel (I) die folgenden Bedeutungen besitzen:
- m ist eine ganze oder gebrochene Zahl von 0,5 bis 20;
- n ist eine ganze oder gebrochene Zahl von 1 bis 100;
- p ist eine ganze oder gebrochene Zahl von 0 bis 20;
- R¹ wird unter den Resten Methyl, Ethyl, n-Propyl und Phenyl ausgewählt;
- das Symbol A stellt einen monovalenten Rest dar, abgeleitet von einem Organometallsalz der Formel (II), in der M ein unter Cr, Mo, W, Mn, Fe, Re und Co ausgewähltes Metall bedeutet;
- R² wird ausgewählt unter:
(1) den linearen Resten Alkylen mit 2 bis 4 Kohlenstoffatomen;
(3) den Resten Alkylen-cyclohexylen, bei denen der lineare Teil Alkylen 2 oder 3 Kohlenstoffatome und der Teil Cyclohexylen eine Gruppe OH umfaßt;
(4) den Resten der Formel (IV), worin die Reste R⁵ und R⁶, gleich oder verschieden, lineare Reste Alkylen mit 2 bis 4 Kohlenstoffatomen darstellen und der Rest R⁶, der mit der Gruppe Z verbunden ist, durch eine Gruppe OH substituiert ist;
- Z gemäß der vorstehend erwähnten Regel unter Berücksichtigung der Bedeutungen von R² unter dem Rest (5) Silylen der Formel (V), worin die Reste R⁷ ihrerseits unter den Resten Methyl, Ethyl und n-Propyl ausgewählt werden, und dem Rest (6) -O-CO-ausgewählt wird.

3. Gepfropfte Photoinitiatoren nach Anspruch 1 oder 2, dadurch gekennzeichnet, daß das Symbol A einen monovalenten Rest darstellt, abgeleitet von einem Organometallsalz der Formel (II), ausgewählt unter:
• (η⁵-Cyclopentadienyl)(η⁶-benzol) Fe⁺, X⁻
• (η₅-Cyclopentadienyl) (η⁶-naphthalin) Fe⁺, X⁻
• (η⁵-Cyclopentadienyl)(η⁶-toluol) Fe⁺, X⁻
• (η⁵-Cyclopentadienyl)(η⁶-cumol) Fe⁺, X⁻
• (η⁵-Cyclopentadienyl) (η⁶-mesitylen) Fe⁺, X⁻
• (η⁵-Cyclopentadienyl) (η⁶-methyl-1-naphthalin) Fe⁺, X⁻
• Bis(η⁶-Benzol) Cr⁺, X⁻
• worin die freie Valenz des monovalenten Symbols A durch einen Liganden L¹ oder einem von zwei Liganden L¹ getragen wird, der nicht substituiert ist, und X⁻ selbst unter PF₆⁻, AsF₆⁻, SbF₆⁻ und ihren Mischungen ausgewählt wird.

4. Verfahren zur Herstellung von gepfropften Photoinitiatoren nach irgendeinem der Ansprüche 1 bis 3, wobei in der Formel (I) p = 0 ist, R² die Bedeutungen (1) und (2) besitzt und Z -Si(R⁷)₂₋ darstellt, dadurch gekennzeichnet, daß man
- eine Polyorganosiloxan-Verbindung mit Wasserstoff-Funktionen der allgemeinen Formel (VIII) 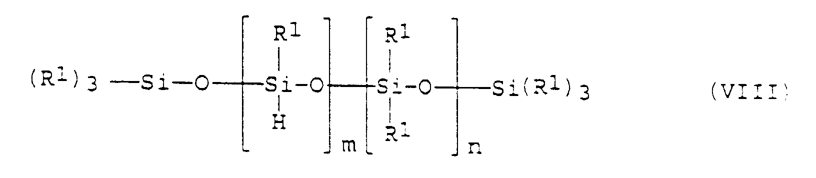 verwendet, in der die Symbcle R¹, m und n die vorstehend bei den Verbindungen der Formel (I) angegebenen allgemeinen oder bevorzugten Bedeutungen besitzen; und
- den Austausch der Wasserstoffatome der Verbindung (VIII) durch den Substituenten A-Z-R²- vornimmt, der durch Reaktion des Polyorganosiloxans der Formel (VIII) mit einer Verbindung erfolgt, die eine ethylenische Nichtsättigung aufweist und fähig ist, durch eine Reaktion der Hydrosilylierung in Anwesenheit eines geeigneten Katalysators zu reagieren.

5. Verfahren zur Herstellung von gepfropften Photoinitiatoren nach irgendeinem der Ansprüche 1 bis 3, wobei in der Formel (I) p = 0 oder eine positive Zahl ist, R² die Bedeutungen (3) und (4) besitzt und Z -O-CO darstellt, dadurch gekennzeichnet, daß man
- eine Polyorganosiloxan-Verbindung mit Epoxy-Funktion(en) der allgemeinen Formel (X) 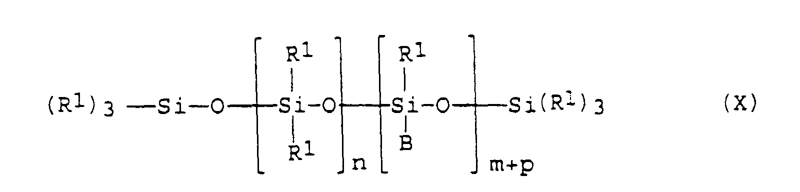 verwendet, in der die Symbole R¹, B, m, n und p die vorstehend bei den Verbindungen der Formel (I) angegebenen allgemeinen oder bevorzugten Bedeutungen besitzen; und
- die vollständige oder teilweise Umwandlung der Reste B der Verbindung (X) zu Substituenten A-Z-R²- vornimmt, die durch Reaktion der Öffnung der Epoxygruppe (getragen von B) durch eine freie Funktion COOH erfolgt, die getragen wird von dem Liganden L¹ oder einem von zwei Liganden L¹ des funktionalisierten Organometallsalzes, das dann der Vorläufer der Gesamtheit A-Z- sein wird.

6. Polyorganosiloxan-Zusammensetzungen die auf kationischem Wege, auf photochemischem Wege oder unter Elektronenstrahlen vernetzbar sind, dadurch gekennzeichnet, daß sie umfassen:
(a) 100 Teile eines Polyorganosiloxans, das funktionelle Gruppen vom Typ Epoxy umfaßt;
(b) eine wirksame Menge einer organometallischen Photoinitiator-Verbindung der Formel (I), die den Gegenstand von irgendeinem der vorstehenden Ansprüche 1 bis 3 bildet,
(c) 0 bis 50 Teile von mindestens einem anderen Bestandteil, das aus der Familie von Zusatzstoffen stammt, wie sie üblicherweise auf diesem Gebiet der Technik verwendet werden.

7. Zusammensetzungen nach Anspruch 6, dadurch gekennzeichnet, daß die Polyorganosiloxane (a) entweder (i) linear oder im wesentlichen linear sind, aus Struktureinheiten der Formel (XII) bestehen und durch Struktureinheiten der Formel (XIII) terminiert sind, oder (2i) cyclisch sind und aus Struktureinheiten der Formel (XII) bestehen: 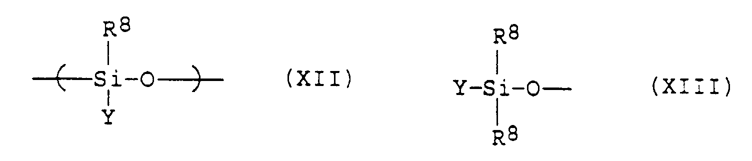 wobei in den Formeln:
• die Symbole R⁸ gleich oder verschieden sind und einen linearen oder verzweigten Rest Alkyl mit 1 bis 6 Kohlenstoffatomen, gegebenenfalls substituiert, Cycloalkyl mit 5 bis 8 Kohlenstoffatomen, Aryl oder substituiertes Aryl darstellen, wobei mindestens 60 Mol-% der Reste R⁸ Reste Methyl sind;
• die Symbole Y gleich oder verschieden sind und entweder die Gruppe R⁸ darstellen oder einen funktionellen organischen Rest vcm Typ Epoxy, der auf kationischem Wege vernetzbar ist, und jede Funktion Epoxy mit einem Atom der Siliconkette über das Zwischenglied eines divalenten Restes verbunden ist, der 2 bis 20 Kohlenstoffatomen und gegebenenfalls ein oder mehrere Heteroatome enthält;
wobei die genannten Polyorganosiloxane (a) pro Mol Polymer mindestens eine Struktureinheit Siloxyl umfassen, worin Y eine funktionelle Gruppe Epoxy ist.

8. Zusammensetzungen nach Anspruch 6 oder 7, dadurch gekennzeichnet, daß die Menge an organometallischem Photoinitiator (b) der Formel (I), ausgedrückt durch die Menge des monovalenten Restes A, der von dem Organometallsalz der Formel (II) abgeleitet ist und durch den genannten Photoinitiator (b) eingebracht wird, zwischen 0,1 und 20 Gewichtsteilen liegt, um 100 Gewichtsteile vernetzbares Polyorganosiloxan zu vernetzen.

9. Verfahren zum Antihaft-Ausrüsten von Artikeln für Oberflächen, an denen sie normalerweise haften, dadurch gekennzeichnet, daß man zwischen 0,1 g und 5 g der zu bestreichenden Zusammensetzung, die den Gegenstand von irgendeinem der Ansprüche 6 bis 8 bildet, pro m² Oberfläche des genannten Artikels aufbringt und anschließend die genannte Zusammensetzung auf photochemischem Wege oder unter Elektronenstrahlen vernetzt.

10. Verfahren nach Anspruch 9, dadurch gekennzeichnet, daß die Operation der Vernetzung durch UV-Strahlung mit einer Wellenlänge in der Größenordnung von 200 nm bis 400 nm realisiert wird.

11. Verwendung der Zusammensetzungen, die den Gegenstand von irgendeinem der Ansprüche 6 bis 8 bilden, in dicker Schicht für die Verkapselung von elektrischen und elektronischen Bauelementen, zum Beschichten von Textilien sowie zur Umhüllung von optischen Fasern.

## Claims

1. Cationic polymerization photoinitiators derived from organometallic complex salts, characterized in that:
· they consist of organometallic complex salts grafted onto a polyorganosiloxane skeleton, and
· they correspond to a linear molecular structure of average formula: 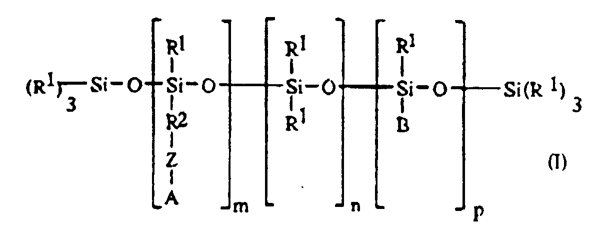 in which:
- the various siloxyl units are statistically distributed in the molecular structure;
- m is an integer or fractional number ranging from 0.5 to 50;
- n is an integer or fractional number ranging from 0 to 500;
- p is an integer or fractional number ranging from 0 to 50;
- the sum m + n is greater than or equal to 2;
- the R¹ symbols are identical or different and each represent a linear or branched alkyl radical having from 1 to 6 carbon atoms or a phenyl radical;
- the A symbol represents a monovalent residue derived from an organometallic salt of formula (II):
(L¹L²M)^{q+}X⁻ _{q} (II)
in which formula:
· M represents a metal belonging to groups 4 to 10 of the periodic classification;
· L¹ represents one ligand or 2 ligands, which are identical or different, bonded to the metal M by π bonds, which ligand(s) is/are chosen from η³-allylalkyl, η⁵-cyclopentadienyl and η⁷-cycloheptatrienyl ligands and η⁶-aromatic compounds chosen from optionally substituted η⁶-benzene ligands and compounds having from 2 to 4 condensed rings, each ring being capable of contributing via 3 to 8 π electrons to the valency layer of the metal M;
· L² represents 0 to 3 identical or different ligand(s) bonded to the metal M by σ electrons, which ligand(s) is/are chosen from CO and NO₂⁺;
· X⁻ is a halogenated complex anion chosen from the BF₄⁻, PF₆⁻, AsF₆⁻, or SbF₆⁻ anions and their mixtures;
· q is a positive integer equal to 1 or 2 which represents the electronic charge of the cationic part of the salt of formula (II);
· the valency bond uniting the monovalent symbol A to Z is carried by a carbon atom of the ligand L¹ or of one of the two ligands L¹ which, in the case of a cyclic ligand, is a cyclic carbon atom;
- the R² symbol represents a divalent organic radical chosen from:
(1) linear or branched alkylene radicals having from 2 to 6 carbon atoms;
(2) radicals of formula:
-R³-O-R⁴- (III)
in which the R³ and R⁴ radicals, which are identical or different, represent linear or branched alkylene radicals having from 1 to 6 carbon atoms;
(3) alkylenecyclohexylene radicals in which the alkylene part, which is linear or branched, contains from 2 to 4 carbon atoms and the cyclohexylene part, which is connected to the Z group, contains an OH group and optionally 1 or 2 alkyl substituents having 1 to 3 carbon atoms;
(4) radicals of formula:
-R⁵-O-R⁶- (IV)
in which the R⁵ and R⁶ radicals, which are identical or different, represent linear or branched alkylene radicals having from 1 to 6 carbon atoms and the R⁶ radical, which is connected to the Z group, or these two radicals is (or are) substituted by one or two OH group(s),
- the Z symbol represents a connecting group chosen from:
(5) when the R² symbol has the meanings (1) and (2): the divalent silyl residue of formula:
-Si(R⁷)₂- (V)
in which the R⁷ radicals are identical or different and each represent a linear or branched alkyl radical having from 1 to 6 carbon atoms;
and
(6) when the R² symbol has the meanings (3) and (4): the -O-CO- radical in which it is the free valency of the CO which is connected to the A residue;
- with the additional conditions according to which:
(7) when the R² symbol has the meanings (1) and (2) and the Z symbol has the meaning (5): p is then a number equal to zero;
(8) when the R² symbol has the meanings (3) and (4) and the Z symbol has the meaning (6): p is a number equal to zero or a positive number and, in this eventuality, the B symbol then represents the precursor radical of the R² radical containing, at its end which is opposite that bonded to the silicon atom, an epoxy group resulting from the union of an oxygen atom with two carbon atoms belonging to an alkyl chain or to a cyclohexyl radical.

2. Grafted photoinitiators according to Claim 1, characterized in that the m, n, p, R¹, A, R² and Z symbols of the formula (I) have the following meanings
- m is an integer or fractional number ranging from 0.5 to 20;
- n is an integer or fractional number ranging from 1 to 100;
- p is an integer or fractional number ranging from 0 to 20;
- R¹ is chosen from methyl, ethyl, n-propyl and phenyl radicals;
- The A symbol represents a monovalent residue derived from an organometallic salt of formula (II) in which M is a metal chosen from Cr, Mo, W, Mn, Fe, Re and Co;
- R² is chosen from:
(1) linear alkylene radicals having from 2 to 4 carbon atoms;
(3) alkylenecyclohexylene radicals, the linear alkylene part of which contains 2 or 3 carbon atoms and the cyclohexylene part of which contains an OH group;
(4) radicals of formula (IV) in which the R⁵ and R⁶ radicals, which are identical or different, represent linear alkylene radicals having from 2 to 4 carbon atoms and the R⁶ radical, which is bonded to the Z group, is substituted by an OH group;
- Z is chosen, according to the abovementioned rule taking into account the meanings of R², from the silylene residue (5) of formula (V) where the R⁷ radicals are chosen from methyl, ethyl and n-propyl radicals and the -O-CO- radical (6).

3. Grafted photoinitiators according to Claim 1 or 2, characterized in that the A symbol represents a monovalent residue derived from an organometallic salt of formula (II) chosen from:
· (η⁵-cyclopentadienyl) (η⁶-benzene)Fe⁺ X⁻
· (η⁵-cyclopentadienyl) (η⁶-naphthalene) Fe⁺ X⁻
· (η⁵-cyclopentadienyl) (η⁶-toluene) Fe⁺ X⁻
· (η⁵-cyclopentadienyl) (η⁶-cumene) Fe⁺ X⁻
· (η⁵-cyclopentadienyl) (η⁶-mesitylene) Fe⁺ X⁻
· (η⁵-cyclopentadienyl) (η⁶-1-methylnaphthalene) Fe⁺ X⁻
· bis(η⁶-benzene) Cr⁺ X⁻
· where the free valency of the monovalent symbol A is carried by an L¹ ligand or the one of the 2 L¹ ligands which is unsubstituted and X⁻ is itself chosen from PF₆⁻, AsF₆⁻ or SbF₆⁻ and their mixtures.

4. Process for the preparation of the grafted photoinitiators according to any one of Claims 1 to 3 in the formula (I) of which p = 0, R² has the meanings (1) and (2) and Z is -Si(R⁷)₂-, characterized in that: - use is made of a polyorganosiloxane compound containing (a) hydrogeno functional group(s) of general formula (VIII): 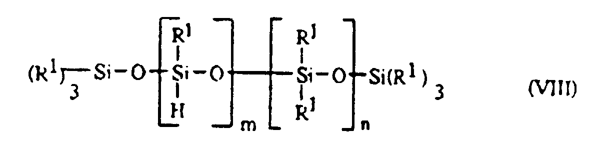 in which the R¹, m and n symbols have the general or preferred meanings indicated above for the compounds of formula (I); and
- replacement of the hydrogen atoms of the compound (VIII) by the A-Z-R²- substituent is carried out by reaction of the polyorganosiloxane of formula (VIII) with a compound having an ethylenic unsaturation capable of reacting by a hydrosilylation reaction in the presence of an appropriate catalyst.

5. Process for the preparation of the grafted photoinitiators according to any one of Claims 1 to 3 in the formula (I) of which p is 0 or a positive number, R² has the meanings (3) and (4) and Z is -O-CO-, characterized in that:
- use is made of a polyorganosiloxane compound containing (an) epoxy functional group(s) of general formula (X): 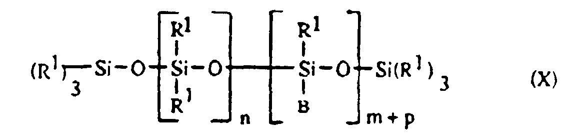 in which the R¹, B, m, n and p symbols have the general or preferred meanings indicated above for the compounds of formula (I); and
- the conversion of all or part of the B radicals of the compound (X) into A-Z-R²- substituents is carried out by an opening reaction of the epoxy group (carried by B) by a free COOH functional group carried by the L¹ ligand or one of the two L¹ ligands of the functionalized organometallic salt which will therefore be the precursor of the A-Z- assembly.

6. Polyorganosiloxane compositions which can be crosslinked cationically, photochemically or under an electron beam, characterized in that they comprise:
(a) 100 parts of a polyorganosiloxane comprising functional groups of epoxy type;
(b) an effective amount of an organometallic photoinitiator compound of formula (I) forming the subject of any one of the above Claims 1 to 3;
(c) 0 to 50 parts of at least one other ingredient belonging to the family of additives commonly used in this field of the art.

7. Compositions according to Claim 6, characterized in that the polyorganosiloxanes (a) are (i) linear or substantially linear and consist of units of formula (XII) terminated by units of formula (XIII) or (2i) cyclic and consist of units of formula (XII): 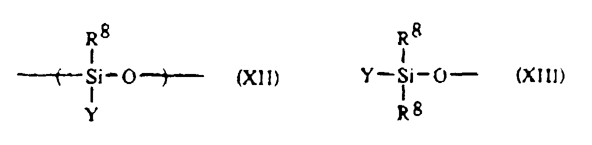 in which formulae:
· the R⁸ symbols are identical or different and represent an optionally substituted, linear or branched, C₁-C₆ alkyl radical, a C₅-C₈ cycloalkyl radical, an aryl radical or a substituted aryl radical, at least 60 mol % of the R⁸ radicals being methyl radicals;
· the Y symbols are identical or different and represent either the R⁸ group or an organic functional radical of epoxy type which can be cationically crosslinked, each epoxy functional group being connected to an atom of the silicone chain via a divalent radical containing from 2 to 20 carbon atoms and optionally 1 or a number of heteroatom(s);
the said polyorganosiloxanes (a) comprising, per mole of polymer, at least one siloxyl unit where Y is a epoxy functional group.

8. Compositions according to Claim 6 or 7, characterized in that the amount of organometallic photoinitiator (b) of formula (I), expressed by the amount of monovalent residue A derived from the organometallic salt of formula (II) contributed by the said photoinitiator (b), is between 0.1 and 20 parts by weight in order to crosslink 100 parts by weight of crosslinkable polyorganosiloxane.

9. Process for making articles non-adhesive to surfaces to which they would normally adhere, characterized in that between 0.1 and 5 g of composition forming the subject of any one of Claims 6 to 8 is applied per m² of surface area of the said article to be coated and the said composition is crosslinked photochemically or under an electron beam.

10. Process according to Claim 9, characterized in that the crosslinking operation is carried out by U.V. radiation with a wavelength of the order of 200 to 400 nanometres.

11. Use of the compositions forming the subject of any one of Claims 6 to 8, in a thick layer for encapsulating electric and electronic components, coating textiles and for sheathing optical fibres.
